# EUROPÄISCHE PATENTSCHRIFT

(11) **EP 2 758 659 B1**
(45) Veröffentlichungstag und Bekanntmachung des Hinweises auf die Patenterteilung: **28.02.2018**
(21) Anmeldenummer: 12769905.6
(22) Anmeldetag: 10.09.2012
(51) Int. Cl.: F03D 7/02, F03D 7/04, G01W 1/02

(54) **VERFAHREN ZUM BETRIEB EINER WINDENERGIEANLAGE**
METHOD FOR OPERATING A WIND POWER PLANT
PROCÉDÉ PERMETTANT DE FAIRE FONCTIONNER UNE ÉOLIENNE

(30) Priorität: 22.09.2011 DE 102011083178
(43) Veröffentlichungstag der Anmeldung: 30.07.2014
(73) Patentinhaber: Senvion GmbH, 22297 Hamburg (DE)
(72) Erfinder: BÖHME, Sebastian, 24782 Büdelsdorf (DE); GOLLNICK, Bert, 15517 Fürstenwalde (DE)
(74) Vertreter: Seemann & Partner Patentanwälte mbB
(86) Internationale Anmeldenummer: PCT/EP2012/003791
(87) Internationale Veröffentlichungsnummer: WO 2013/041192

(56) Entgegenhaltungen:
- EP-A2- 2 020 506
- WO-A1-01/25630
- DE-A1-102009 037 239

## Beschreibung

Die Erfindung betrifft ein Verfahren zum Betrieb einer Windenergieanlage mit wenigstens einem Rotorblatt, dessen Blattwinkel einstellbar ist, wobei die Windenergieanlage mit einem vorgebbaren reduzierten Sollenergieertrag betrieben wird.

Beim Betrieb von Windenergieanlagen kommt es vor, dass aufgrund von externen Anforderungen, beispielsweise des Netzversorgers, oder aufgrund von Störfällen die Windenergieanlagen in deren Leistungen reduziert werden müssen. Bei einer Leistungsreduktion der Windenergieanlage die nicht durch den Betreiber der Windenergieanlage verursacht ist, sondern beispielsweise durch den Netzversorger, ist es notwendig, dass der verlorene Energieertrag quantifiziert wird, da in der Regel jemand für diesen nicht erzielten Ertrag Kompensationszahlungen zu leisten hat.

Existiert ein Windmessmast in der Nähe der Windenergieanlage oder eines Windenergieanlagenparks, könnte aufgrund der vorliegenden Leistungskurve der Windenergieanlage im leistungsoptimierten Normalbetrieb der Windenergieanlage das Ertragspotential der Windenergieanlage, wenn die Windenergieanlage mit einem reduzierten Sollenergieertrag betrieben wird, durch Messen einer realen Windgeschwindigkeit und Übertragen dieser auf die Leistungskurve bzw. die Energieertragskurve der Windenergieanlage errechnet werden. Hierzu müsste dann der tatsächliche Energieertrag, der durch die gewollte bzw. vorgegebene Reduktion erzielt wird, gemessen werden. Bei Kenntnis der tatsächlichen Windstärke wird dann über die Leistungskurve bzw. Energieertragskurve der Windenergieanlage im leistungsoptimierten Normalbetrieb das Ertragspotential bestimmt und entsprechend die Differenz dieser beiden Energieerträge, nämlich des Ertragspotentials der Windenergieanlage, was dem Energieertrag entspricht, den die Windenergieanlage im leistungsoptimierten Normalbetrieb bei der vorliegenden Windgeschwindigkeit erzielt hätte, und des tatsächlich gemessenen reduzierten Energieertrags aufgrund des vorgegebenen reduzierten Sollenergieertrags gebildet. Diese Differenz entspricht dem Ertragsausfall und müsste dann beispielsweise vom Netzbetreiber an den Betreiber der Windenergieanlage vergütet werden.

Üblicherweise existiert allerdings kein Windmessmast in der Nähe einer Windenergieanlage bzw. eines Windparks bzw. würde ein Windmessmast nur ungefähre Angaben über die tatsächliche Windgeschwindigkeit an einer Windenergieanlage angeben, wenn beispielsweise die Windenergieanlage nicht frei angeströmt wird oder der Windmessmast nicht entsprechend frei angeströmt werden würde bzw. turbulente Winde vorherrschen.

Auch die Idee, ein Gondelanemometer der leistungsreduzierten Anlage bzw. der Windenergieanlage zu nutzen, die mit einem vorgebbaren reduzierten Sollenergieertrag betrieben wird, ist nicht geeignet, da die Anemometermessung durch den Rotor stark verfälscht wird. Für den leistungsoptimierten Normalbetrieb der Windenergieanlage werden hierzu statische Anemometerkorrekturen verwendet, die allerdings nicht auf die Anemometermesswerte anwendbar sind, wenn die Windenergieanlage in einem vorgebbaren reduzierten Sollenergieertrag, also außerhalb des leistungsoptimierten Normalbetriebs betrieben wird.

DE 10 2009 037 239 A1 betrifft eine Windenergieanlage mit einem von einem Rotor angetriebenen Generator zur Erzeugung elektrischer Leistungen und mit einer Steuerung, die ein Pitchmodul zur Verstellung eines Pitchwinkels von Blättern des Rotors aufweist. Die Steuerung weist einen Eingang für eine geforderte Leistungsreserve auf. In Abhängigkeit von einem Betriebspunkt der Windenergieanlage wird von der Steuerung ein Soll-Pitchwinkel bestimmt. Ferner ist ein Sekundärpitchregler vorgesehen, der einen Detektor für eine verfügbare Leistung sowie ein dynamisches Offset-Modul umfasst. An das dynamische Offset-Modul sind Eingangssignale für die von dem Detektor bestimmte verfügbare Leistungsreserve, die geforderte Leistung und die erzeugte elektrische Leistung angelegt. Das dynamische Offset-Modul ist ferner dazu ausgebildet, einen Wert für einen Pitchwinkel-Offset zu bestimmen. Ferner ist ein Aufschaltungsglied vorgesehen, das den Soll-Pitchwinkel um den Pitchwinkel-Offset verändert.

EP 2 020 506 A2 ist ein Verfahren zur Ermittlung einer Regelungsreserve von einer oder mehreren Windenergieanlagen zu entnehmen. Den Windenergieanlagen wird zum Betrieb ein Sollwert für mindestens eine elektrische Größe vorgegeben. Für die Windenergieanlagen ist eine Steuereinheit vorgesehen, die eine Leistungskurve aufweist, welche abhängig von Werten des Windes einen Maximalwert der elektrischen Größe enthält. Die Steuereinheit ermittelt über die Leistungskurve aus dem Istwert des Windes einen Maximalwert der elektrischen Größe und subtrahiert hiervon einen aktuellen Wert der elektrischen Größe. Die Steuereinheit übermittelt den ermittelten Maximalwert und/oder die Differenz als Regelungsreserve an eine übergeordnete Steuereinheit und/oder an ein externes Energieversorgungsunternehmen.

WO 01/25630 A1 ist ein Verfahren zum Betrieb eines Windparks, bestehend aus zumindest zwei Windenergieanlagen, zu entnehmen. Die von den Windenergieanlagen abgegebene Leistung wird in ihrem Betrag auf einen maximal möglichen Netzeinspeisewert begrenzt, welcher geringer ist, als der maximal mögliche Wert der abzugebenden Leistung. Der maximal mögliche Einspeisewert ist bestimmt durch die Aufnahmekapazität des Netzes, in welches die Energie eingespeist wird. Ebenso ist vorgesehen, dass der maximal mögliche Einspeisewert durch die Leistungskapazität der Energieübertragungseinheit bzw. des Transformators, mit dem die von der Windenergieanlage erzeugte Energie in das Netz eingespeist wird, bestimmt ist. WO2013/029993 ist ein Stand der Technik gemäß Artikel 54(3) EPÜ und offenbart ein Verfahren zum Betrieb einer Windenergieanlage mit einem vorgebbaren reduzierten Sollenergieertrag, wobei der Ertragsausfall zwischen einem Ertragspotential und dem Sollenergieertrag ermittelt wird. Der Ertragspotential wird mittels einer Kennlinie für einen eingestellten blattwinkelabhängigen Parameter und eine gemessene Windgeschwindigkeit bestimmt.

Es ist Aufgabe der vorliegenden Erfindung, diesen Nachteil des Standes der Technik zu beseitigen und ein Verfahren zum Betrieb einer Windenergieanlage mit wenigstens einem Rotorblatt, dessen Blattwinkel einstellbar ist, anzugeben, wobei die Windenergieanlage mit einem vorgebbaren reduzierten Sollenergieertrag betrieben wird, so dass ein Ertragsausfall der Windenergieanlage bzw. eines Windenergieanlagenparks genauer bestimmt werden kann.

Gelöst wird diese Aufgabe durch ein Verfahren zum Betrieb einer Windenergieanlage mit wenigstens einem Rotorblatt, dessen Blattwinkel einstellbar ist, die mit einem vorgebbaren reduzierten Sollenergieertrag betrieben wird, wobei zum Bestimmen eines Ertragsausfalls ein Ertragspotential bestimmt wird, wobei zum Bestimmen des Ertragspotentials wenigstens ein vorgebbarer Betriebsparameter der Windenergieanlage gemessen wird und auf wenigstens eine gespeicherte Kennlinie für den reduzierten Sollenergieertrag angewendet wird, wobei außerdem der Istenergieertrag bestimmt wird und der Ertragsausfall aus der Differenz des Ertragspotentials und des Istenergieertrags gebildet wird, wobei als vorgebbarer Betriebsparameter ein leistungsabhängiger Parameter, ein rotationsabhängiger Parameter, ein blattwinkelabhängiger Parameter und/oder ein windgeschwindigkeitsabhängiger Parameter vorgesehen ist oder sind, wobei mittels einer Kennlinie für den vorgegebenen reduzierten Sollenergieertrag und einen gemessenen rotationsabhängigen Parameter und einen gemessenen blattwinkelabhängigen Parameter das Ertragspotential bestimmt wird.

Bei dem erfindungsgemäßen Verfahren beinhaltet der Begriff "vorgebbarer reduzierter Sollenergieertrag" auch eine für einen Zeitraum vorgebbar reduzierte Leistung. Ein "Ertragspotential" ist im Rahmen der Erfindung insbesondere ein möglicher Energieertrag der Windenergieanlage, soweit diese in einem leistungsoptimiertem Normalbetrieb betrieben wird, wie dieses beispielsweise in Bild 14.2 des Lehrbuchs Erich HAU "Windkraftanlagen Grundlagen, Technik, Einsatz, Wirtschaftlichkeit", 4. Auflage, Springer-Verlag 2008, Seite 542, für beispielsweise 22 rpm dargestellt ist. Das Ertragspotential ist dann die entsprechend abgegebene Leistung über einen bestimmten Zeitraum. Ein Rotorblatt mit einstellbarem Blattwinkel beinhaltet im Rahmen der Erfindung ein Rotorblatt, das, insbesondere um dessen Längsachse, verdrehbar ist.

Die erfindungsgemäß vorgesehene gespeicherte Kennlinie ist eine Kennlinie betreffend wenigstens einen Betriebsparameter der Windenergieanlage in einem Betrieb außerhalb eines leistungsoptimierten Normalbetriebs, bei dem also die Windenergieanlage mit einem reduzierten Sollenergieertrag betrieben wird. Zusätzlich ist eine Kennlinie abgespeichert, die für den leistungsoptimierten Normalbetrieb gilt. Hierbei ist insbesondere eine Anemometerkorrekturkennlinie für den leistungsoptimierten Normalbetrieb gemeint.

Als vorgebbarer Betriebsparameter oder als vorgebbare Betriebsparameter ist bzw. sind ein leistungsabhängiger Parameter, ein rotationsabhängiger Parameter, ein blattwinkelabhängiger Parameter und/oder ein windgeschwindigkeitsabhängiger Parameter vorgesehen.

In einer ersten besonders bevorzugten Ausführungsform ist als windgeschwindigkeitsabhängiger Parameter eine mittels eines Gondelanemometers der Windenergieanlage gemessene Windgeschwindigkeit vorgesehen, die mit einer für den vorgegebenen reduzierten Sollenergieertrag gespeicherten Kennlinie in eine Istwindgeschwindigkeit und/oder ein Ertragspotential transformiert wird. Bei diesem Konzept werden, vorzugsweise eine Vielzahl von, Anemometerkorrektur-Kennlinien für verschiedene Leistungsreduktionsgrade bzw. vorgegebene reduzierte Sollenergieerträge verwendet. Der Betriebsparameter, der dann gemessen wird, ist die mit dem Gondelanemometer gemessene Windgeschwindigkeit. Diese wird dann über eine Kennlinie, die vorab in einer Referenzmessung ermittelt wurde und die als eine Art Korrekturfunktion für das Gondelanemometersignal in Abhängigkeit von dem Maß der Leistungsreduktion bzw. Sollenergieertragsreduktion vorgesehen ist, bestimmt. Derartige Messwertkorrekturen der Anemometermesswerte sind erforderlich, da der Rotor abhängig von der Energie, die er dem Wind entzieht, die Gondelanemometermessung verfälscht. Die Kennlinie für einen vorgebbaren reduzierten Sollenergieertrag könnte beispielsweise die Begrenzung des Energieertrags bzw. der Leistung auf 90% oder 75% oder 50% oder 25% der Nennleistung bzw. des Ertragspotentials sein. Es ist somit sinnvoll, eine Kennlinienschar vorzusehen, um bei Reduktion des Sollenergieertrags eine entsprechende passende Kennlinie vorab ausgemessen zu haben.

Eine besonders vorteilhafte Ausführungsform sieht es vor, eine Kennlinienschar von mindestens drei Kennlinien zu verwenden, bei denen eine Kennlinie für den leistungsoptimierten Normalbetrieb gültig ist, wobei außerdem eine zweite Kennlinie für den leistungslosen oder nahezu leistungslosen Betrieb, z.B. mit weniger als 10% des aktuellen Ertragspotentials gültig ist. Mindestens eine weitere Kennlinie liegt dann zwischen der ersten und der zweiten Kennlinie im Betrieb mit vorgegebenem, reduzierten Sollenergieertrag.

Derartige Kennlinien zur Korrektur des Gondelanemometermessignals können in einer Referenzmessung vermessen werden. Diese kann auf einem Prototypen der Windenergieanlage oder einer anderen Referenzanlage durchgeführt worden sein oder alternativ auch auf der Windenergieanlage selbst durch beispielsweise Bereitstellen eines kalibrierten Anemometersignals, beispielsweise über einen, insbesondere temporär aufgestellten, Messmast oder eine benachbarte Referenzwindenergieanlage, die ihrerseits bereits vermessen wurde.

Mittels einer Kennlinie wird für den vorgegebenen reduzierten Sollenergieertrag und einen gemessenen rotationsabhängigen Parameter und einen gemessenen blattwinkelabhängigen Parameter das Ertragspotential bestimmt.

In dem erfindungsgemäßen Verfahren wird aus Rotordaten auf das Ertragspotential der Windenergieanlage mit vorgebbarem bzw. vorgegebenem reduzierten Sollenergieertrag geschlossen. Hierbei werden insbesondere Kennlinienfelder verwendet, die für den Rotor bei einem entsprechenden reduzierten Sollenergieertrag vorgesehen sind. Es wird dann aus einem gemessenen rotationsabhängigen Parameter wie beispielsweise der Drehzahl und einem gemessenen blattwinkelabhängigen Parameter wie beispielsweise dem Blattwinkel auf die Istwindgeschwindigkeit bzw. das Ertragspotential geschlossen.

Bei der Nutzung der Rotordaten zur Bestimmung des Ertragspotentials können die Kennlinien vorzugsweise aus Referenzmessungen bestimmt werden. Es ist allerdings auch vorzugsweise möglich, die Kennlinien durch Simulationsrechnungen zu bestimmen.

Vorzugsweise werden ein leistungsabhängiger und ein rotationsabhängiger und ein blattwinkelabhängiger Parameter bestimmt, wobei wenigstens einer der drei genannten Parameter gemessen wird. Hierdurch ist eine sehr genaue Bestimmung des Ertragspotentials möglich.

Ist die Leistungsvorgabe bzw. der reduzierte Sollenergieertrag 0% der Nennleistung, kann ein besonders einfaches bevorzugtes Verfahren dadurch erzielt werden, dass ein konstanter Blattwinkel eingestellt wird oder auf eine konstante Rotordrehzahl geregelt wird, so dass dann bei Einstellung eines konstanten Blattwinkels aus der Rotordrehzahl eine Istwindgeschwindigkeit und damit ein Ertragspotential ermittelt werden kann und andersherum bei einer vorgegebenen zu regelnden Rotordrehzahl über den hierfür eingestellten Blattwinkel eine Istwindgeschwindigkeit bzw. das Ertragspotential ermittelt werden kann. Hierzu wird im Folgenden insbesondere unter Bezugnahme auf die Figuren noch näher eingegangen.

Vorzugsweise ist oder wird die wenigstens eine gespeicherte Kennlinie an der Windenergieanlage oder einer dieser Windenergie entsprechenden Windenergieanlage mittels wenigstens einer Referenzmessung und einem kalibrierten Energieertrags- und/oder Windgeschwindigkeitssignal bestimmt. Wie vorstehend schon angegeben, kann das kalibrierte Windgeschwindigkeitssignal beispielsweise von einem Messmast in der Nähe der Windenergieanlage bzw., wenn die Windenergieanlage noch nicht errichtet ist, an dem Ort der Windenergieanlage ermittelt werden. Das kalibrierte Windgeschwindigkeitssignal kann auch von einer frei angeströmten benachbarten schon kalibrierten Windenergieanlage bestimmt werden.

Vorzugsweise ist eine Schar von Kennlinien für verschiedene vorgegebene reduzierte Sollenergieerträge vorgesehen. Hierdurch wird das Verfahren für verschiedene reduzierte Sollenergieerträge sehr genau. Vorzugsweise wird bei einem nicht vermessenen vorgegebenen reduzierten Sollenergieertrag zwischen den Kennlinien interpoliert. Die Interpolation kann hierbei linear, quadratisch oder beispielsweise über Splines mit Funktionen, die auch die dritte Potenz beinhalten, erzielt werden.

Vorzugsweise ist als leistungsabhängiger Parameter eine Leistung oder ein Drehmoment, als rotationsabhängiger Parameter eine Drehzahl oder eine Fliehkraft und/oder als blattwinkelabhängiger Parameter ein Blattwinkel oder ein Druckunterschied an einem Rotorblatt vorgesehen. Es können auch andere Messgrößen als entsprechende Parameter definiert werden, die mit entsprechenden Umrechnungen zu den gewünschten Parametern, die mit dem leistungsabhängigen Parameter, mit dem rotationsabhängigen Parameter oder mit dem blattwinkelabhängigen Parameter gleichwertig sind.

Bevorzugt ist ein Verfahren zum Betrieb eines Windenergieanlagenparks mit mehreren Windenergieanlagen, dergestalt ausgestaltet, dass wenigstens eine Windenergieanlage der vorstehenden Art nach einem Verfahren wie vorstehend beschrieben, betrieben wird.

Besonders bevorzugt und einfach ist das Verfahren zum Betrieb eines Windenergieanlagenparks dann, wenn die wenigstens eine Windenergieanlage leistungslos betrieben wird bzw. mit einem vorgegebenen reduzierten Sollenergieertrag von 0% und die weiteren Windenergieanlagen des Windenergieanlagenparks in einem leistungsoptimierten Normalbetrieb betrieben werden. Ein leistungsloser Betrieb einer Windenergieanlage bzw. ein Betrieb einer Windenergieanlage mit einem vorgegebenen reduzierten Sollenergieertrag von 0% ist im Rahmen der Erfindung ein Betrieb, bei dem der Rotor der Windenergieanlage sich um dessen Horizontalachse dreht, ohne Energie in ein Netz einzuspeisen.

Weist der Windenergieanlagenpark beispielsweise 10 Windenergieanlagen auf und es soll eine Reduktion um 10% von der Nennleistung bzw. dem Nennertragspotential zur Verfügung gestellt werden, könnte eine der Windenergieanlagen des Windenergieanlagenparks leistungslos betrieben werden und der Rest im leistungsoptimierten Normalbetrieb, so dass dann eine Nennleistung des Windenergieanlagenparks von 90% des Ertragspotentials bzw. der Gesamtnennleistung gegeben ist. Die leistungslos betriebene bzw. mit einem reduzierten Sollenergieertrag von 0% betriebene Windenergieanlage kann dann auch einfach dazu genutzt werden, die Istwindgeschwindigkeit zu bestimmen. Hierzu werden im Folgenden auch noch weitere Ausführungen vorgenommen.

Besonders genau ist dieses bevorzugte Verfahren dann, wenn der Windenergieanlagenpark viele Windenergieanlagen, beispielsweise mehr als 20 Windenergieanlagen, aufweist. In diesem Fall ist eine sehr genaue Einstellung der Parkleistung bzw. des Parkenergieertrags möglich, wobei dann auch über die Windenergieanlage bzw. Windenergieanlagen, die mit einem reduzierten Sollenergieertrag von 0% betrieben werden, sehr genau und einfach das Ertragspotential dieser Windenergieanlagen bestimmt werden kann.

Vorzugsweise wird die leistungslos betriebene Windenergieanlage auf einen vorgegebenen Blattwinkel des wenigstens einen Rotorblatts eingestellt und über eine Kennlinie wird das Ertragspotential aus der gemessenen bzw. bestimmten Drehzahl ermittelt. Alternativ hierzu wird vorzugsweise die leistungslos betriebene Windenergieanlage auf eine vorgegebene Drehzahl eingestellt bzw. geregelt und das Ertragspotential über eine Kennlinie anhand des gemessenen bzw. bestimmten Blattwinkels der Rotorblätter oder des Rotorblatts der Windenergieanlage bestimmt.

Eine weitere vorteilhafte Ausführungsform sieht es in einem Windpark vor, im Wesentlichen alle Anlagen gleichmäßig mit reduziertem Sollenergieertrag zu betreiben. Dies weist den Vorteil auf, dass die Leistung des Windparks stufenlos einstellbar ist, z.B. wenn besonders genaue Anforderungen an die Genauigkeit der angefragten Sollenergieertragsreduzierung bestehen. Weiterhin weist dieses Verfahren den Vorteil auf, dass alle Windenergieanlagen des Windparks gleichmäßig altern. Im Falle der gleichmäßigen Sollenergieertragsreduzierung mit allen Windenergieanlagen ist die Bestimmung des Ertragsausfalls jedoch nicht so einfach möglich wie im Falle des leistungslosen Betriebs.

Vorzugsweise wird für jede Windenergieanlage ein windgeschwindigkeitsabhängiger Parameter gemessen und auf eine Mehrzahl von gespeicherten Kennlinien angewendet oder es wird ein leistungsabhängiger und ein rotationsabhängiger und ein blattwinkelabhängiger Parameter bestimmt oder gemessen, wobei wenigstens einer der drei letztgenannten gemessen wird. Letztgenannter Ausführungsform liegt die Erkenntnis zugrunde, dass zur genauesten Ermittlung des Ertragspotentials des Windrotors die Kenntnis dieser drei Parameter sinnvoll ist. Es kann aufgrund der regelungstechnischen Praxis der Windenergieanlagen aber ausreichend sein, nur ein oder zwei dieser drei Parameter zu messen. Dies gilt insbesondere für Windenergieanlagen, bei denen der Regler feste Kennlinien einstellt wie z.B. das Drehmoment in fester Abhängigkeit vom Blattwinkel oder der Rotorblattwinkel abhängig von der Generatorleistung. In diesem Fall ist ein Teil der Parameter ohne Messung bestimmbar und es ist nur die Messung der freien, unbekannten Parameter erforderlich, um alle drei Parameter zur Ermittlung des Ertragspotentials zu bestimmen.

Gemäß einem Beispiel wird ein Verfahren zur Bestimmung des Ertragsausfalls einer um ein vorgegebenes Maß leistungsreduzierten Windenergieanlage mit mindestens einem Rotorblatt mit Blattwinkelverstellung durch Bestimmung von Betriebsparameterkennlinien bzw. Kennlinien in Abhängigkeit des Maßes der Leistungsreduzierung in mindestens einer Referenzmessung mittels kalibriertem Energieertrag bzw. Windgeschwindigkeitssignal angegeben, wobei die Kennlinie bzw. die Kennlinien in einen der Windenergieanlage zugeordneten Datenspeicher übertragen bzw. gespeichert sind, wobei ein Ertragspotential der Windenergieanlage durch Messung von Betriebsparametern an der Windenergieanlage und Anwendung der gespeicherten Kennlinie bzw. Kennlinien in Abhängigkeit von dem Maß der Leistungsreduzierung vorgenommen wird, wobei der vorhandene Energieertrag durch Messung von Betriebsparametern an der Windenergieanlage beispielsweise der abgegebenen Leistung bestimmt wird und der Ertragsausfall der Windenergieanlage aus der Differenz des Ertragspotentials und dem vorhandenen Energieeintrag bzw. Energieertrag bestimmt wird.

Das Ertragspotential kann beispielsweise auch durch Bestimmung einer Schätzwindgeschwindigkeit erfolgen, die dann mittels einer Leistungskurve bzw. Ertragskurve der Windenergieanlage in das Ertragspotential umgerechnet werden kann. Ein kalibriertes Windgeschwindigkeitssignal stammt vorzugsweise aus einem Messmast mit kalibrierter Windsensorik, kann allerdings auch durch ein kalibriertes Energieertrags- oder Windgeschwindigkeitssignal einer benachbarten Windenergieanlage bereitgestellt werden, die frei angeströmt wird. Die Leistung ist erfindungsgemäß bevorzugt die Abgabeleistung. Es kann sich hierbei aber auch um die mechanische Leistung am Rotor handeln, beispielsweise eine die über eine Drehmomenterfassung einer Rotorwelle bestimmt wird. Entsprechend ist von Energieertrag auch dann die Rede, wenn eine bestimmte Leistung benannt ist, wobei der Energieertrag die entsprechende Leistung über einen gewissen Zeitraum darstellt, und zwar nach der bekannten Formel Energie = Leistung x Zeit.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein schematisches Diagramm der Generatordrehzahl über der Windgeschwindigkeit einer leistungslos betriebenen Windenergieanlage,
- Fig. 2: eine schematische Darstellung des Blattwinkels über der Windgeschwindigkeit bei konstanter Generatordrehzahl,
- Fig. 3: eine schematische Darstellung einer Schar von Kennlinien bei verschiedenen vorgegebenen Sollenergieerträgen,
- Fig.4: eine schematische Darstellung eines Diagramms der Rotordrehzahl über der Zeit bei turbulentem Wind um eine Windgeschwindigkeit von 15m/s bei einem Blattwinkel von ungefähr 30°,
- Fig. 5: eine schematische dreidimensionale Darstellung eines Diagramms mit entsprechenden Kennlinien mit den Koordinaten Blattwinkel, Ertragspotential, Drehzahl, und
- Fig. 6: eine schematische Darstellung von Kennlinien zur Anpassung der gemessenen Windgeschwindigkeit auf die tatsächliche Istwindgeschwindigkeit.

In den Zeichnungen sind jeweils gleiche oder gleichartige Elemente und/oder Teile mit denselben Bezugsziffern versehen, so dass von einer erneuten Vorstellung jeweils abgesehen wird.

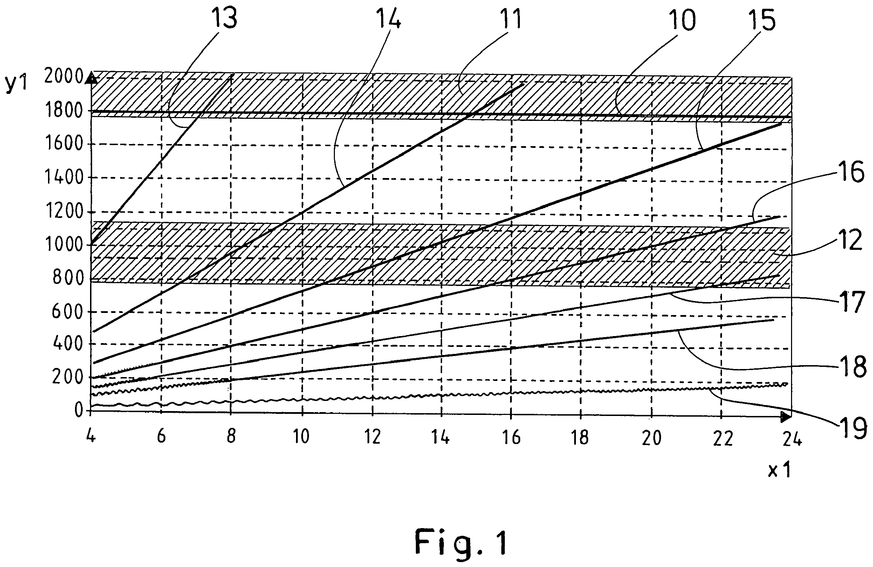

Fig. 1 zeigt schematisch ein Diagramm von Leerlaufdrehzahlen einer Windenergieanlage, die mit einem reduzierten Sollenergieertrag von 0% der Nennleistung bzw. des Nennenergieertrages der Windenergieanlage betrieben wird. Es ist aufgetragen mit Y1 die Generatordrehzahl in Umdrehung/min und mit X1 die Windgeschwindigkeit in m/s. Zudem ist in Fig. 1 mit 1.800 Umdrehungen/min die Nenndrehzahl 10 gezeigt und ein verbotener Drehzahlbereich 11 sowie ein verbotener Drehzahlbereich 12. Der verbotene Drehzahlbereich 11 ist bei einer leistungslos betriebenen Windenergieanlage verboten, da ansonsten zu schnell gefährlich hohe Drehzahlen mit hohen Fliehkräften entstünden. Der verbotene Drehzahlbereich 12 liegt an Eigenresonanzen der Windenergieanlage. Durch den verbotenen Drehzahlbereich 12 sollte im Betrieb schnell durchfahren werden.

Fig. 1 zeigt, dass bei verschiedenen Blattwinkeln bzw. Pitch-Winkeln die Leerlaufdrehzahlen von niedrigen Windgeschwindigkeiten zu hohen Windgeschwindigkeiten sich im Wesentlichen linear erhöhen.

Bezugsziffer 13 bezeichnet einen Verlauf der Leerlaufdrehzahl bei einem Blattwinkel α von 20°, 14 bei einem Blattwinkel α von 30°, 15 bei einem Blattwinkel α von 40°, 16 bei einem Blattwinkel α von 50°, 17 bei einem Blattwinkel α von 60°, 18 bei einem Blattwinkel α von 70° und 19 bei einem Blattwinkel α von 80°. Zu erkennen ist, dass sich somit die Blattwinkel 70° oder 80° oder Blattwinkel dazwischen gut eignen würden, um von der Generatordrehzahl auf eine Windgeschwindigkeit zu schließen. Somit wird bei einer leistungslos betriebenen Windenergieanlage bzw. einer Windenergieanlage, die mit einem vorgebbaren reduzierten Sollenergieertrag von 0% der Nennleistung betrieben wird, der Rotor als guter Indikator für die tatsächliche Windgeschwindigkeit verwendet. Über diese tatsächliche festgestellte Windgeschwindigkeit kann dann über die Leistungskennlinie der Windenergieanlage im leistungsoptimierten Normalbetrieb das Ertragspotential bestimmt werden. Beispielsweise ist dann die Kurve 18 der Fig. 1 die gespeicherte Kennlinie für den reduzierten Sollenergieertrag von 0% und der zu messende vorgebbare Betriebsparameter der Windenergieanlage die Drehzahl des Generators. Hierdurch ergibt sich die tatsächliche Windgeschwindigkeit am Ort der Windenergieanlage, woraus dann über die Kennlinie der Windenergieanlage, die im leistungsoptimierten Normalbetrieb hinterlegt ist, sich das Ertragspotential bei der so gemessenen Istwindgeschwindigkeit ergibt.

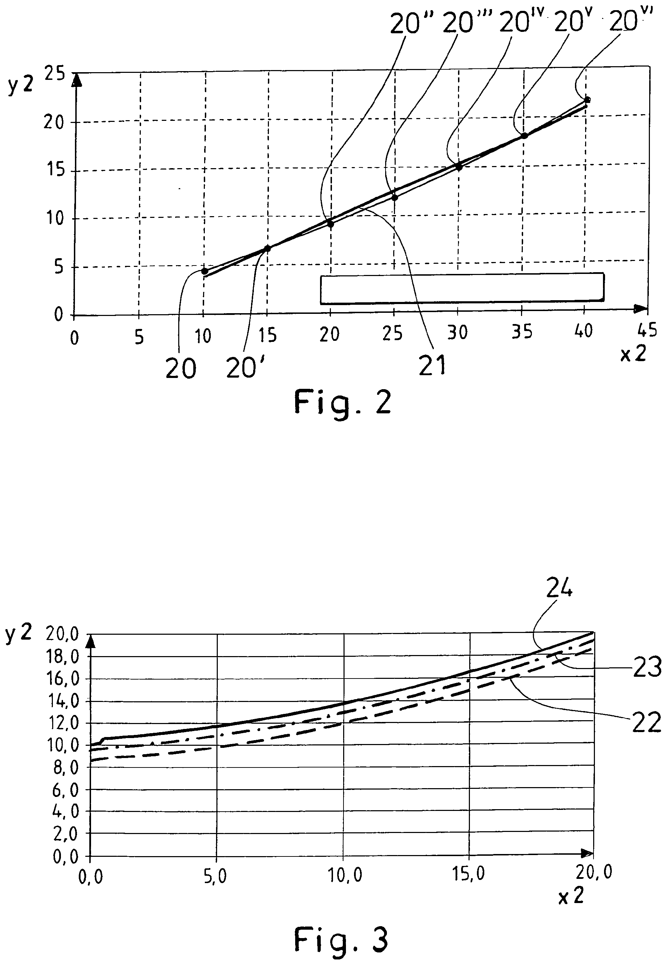

Fig. 2 zeigt eine schematische Darstellung eines Diagramms der Windgeschwindigkeit bzw. Istwindgeschwindigkeit Y2 in m/s über dem Blattwinkel X2 in Grad. Es sind entsprechende Messwerte 20 bis 20^{IV} dargestellt und eine Ausgleichsgerade 21 für diese Messwerte, da diese im Wesentlichen auf einer Gerade liegen. Es kann auch eine andere Funktion zur Anpassung der Messwerte vorgesehen sein, um eine möglicherweise genauere Interpolation der Messwerte vorzusehen. Hierbei kann es sich um eine quadratische oder eine Funktion mit einer dritten Potenz handeln. Eine derartige Kurve ist als dünne Linie in Fig. 2. eingezeichnet. In diesem Fall wird die Windenergieanlage auf beispielsweise eine Generatordrehzahl von 1.100 Umdrehungen/min. eingestellt bzw. geregelt. Bei dieser eingestellten bzw. auf diesen Wert geregelten Generatordrehzahl kann über den Blattwinkel, der benötigt wird, um die Drehzahl einzustellen, auf die Windgeschwindigkeit, d.h. die Istwindgeschwindigkeit geschlossen werden. Der Arbeitsbereich der Drehzahl des Generators kann bei diesem Verfahren sowohl unter- als auch oberhalb des kritischen Drehzahlbandes 12 aus Fig. 1 liegen.

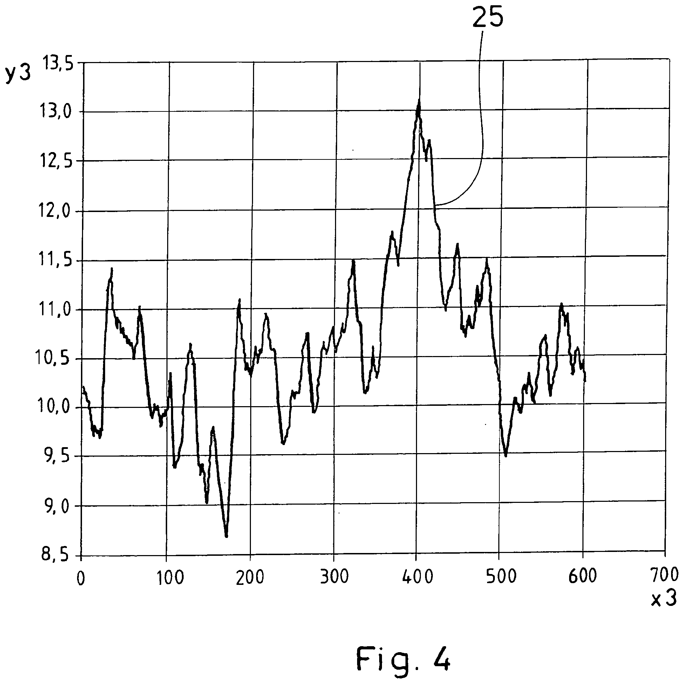

Um zu überprüfen, ob dieses Verfahren auch bei turbulentem Wind funktioniert, wurde eine Simulation durchgeführt bei einem Wind von 15m/s, der turbulent eingestellt ist, wobei etwa mit einem Blattwinkel von 30° gerechnet wurde. Hierzu ist ein schematisches Diagramm in Fig. 4 dargestellt, bei dem die Rotordrehzahl Y3 in Umdrehung/min. über der Zeit X3 in Sekunden dargestellt ist. Die Kurve 25 zeigt die Variation der Rotordrehzahl über der Zeit. Die Nenndrehzahl liegt bei der Windenergieanlage, die hier zur Simulation benutzt wurde, nämlich der MM82 der Anmelderin, bei 17,07 Umdrehungen/min. Die Standardabweichung bei der Simulation ergab 0,8 Umdrehungen/min. und die maximale Drehzahl 13,1 Umdrehungen/min. Das heißt, es ist auch bei diesem Verfahren nicht mit einer Überdrehzahl zu rechnen, obwohl die Windenergieanlage auch leistungslos wie beim vorherigen Beispiel betrieben wird.

In dem Ausführungsbeispiel gemäß Fig. 2 kann auch wieder wie bei Fig. 1 auf eine Istwindgeschwindigkeit geschlossen werden, die analog zu dem Beispiel, das zu Fig. 1 beschrieben wurde, zu einem Ertragspotential führt.

Um einen genaueren Wert bzw. weniger schwankenden Wert für das Ertragspotential vorzusehen, kann vorgesehen sein, die entsprechenden Messwerte über eine gewisse Zeit zu mitteln, wie beispielsweise ein Zehnsekundenmittel, ein Zwanzigsekundenmittel oder ein Ein- oder Fünfminutenmittel oder ein Zehnminuten- oder Fünfzehnminutenmittel.

Fig. 3 zeigt schematisch verschiedene Kennlinien bei entsprechenden vorgegebenen Sollenergieerträgen bzw. Sollleistungen, und zwar genauer gesagt ein Diagramm der Windgeschwindigkeit Y2 in m/s über einem Blattwinkel X2 in Grad. Die Kennlinie 24 ist eine Kennlinie bei Nennleistung. Die Kennlinie 23 bei 80% Nennleistung bzw. einem vorgebbaren reduzierten Sollenergieertrag von 80% des Nennenergieertrags und die Kennlinie 22 eine Kennlinie bei 60% Nennleistung bzw. einem vorgebbaren reduzierten Sollenergieertrag von 60% des Nennenergieertrags. Auch hierüber kann analog wie bei Fig. 2 dann je nach vorgegebenem reduzierten Sollenergieertrag die Istwindgeschwindigkeit bestimmt werden. Bei Sollenergieerträgen, die zwischen diesen Kennlinien liegen, kann eine Interpolation stattfinden. Bevorzugt ist allerdings eine Mehrzahl von Kennlinien vorher vermessen und gespeichert worden, so dass eine möglichst große Anzahl an Kennlinien für verschiedene Sollenergieerträge vorliegen und verwendet werden können.

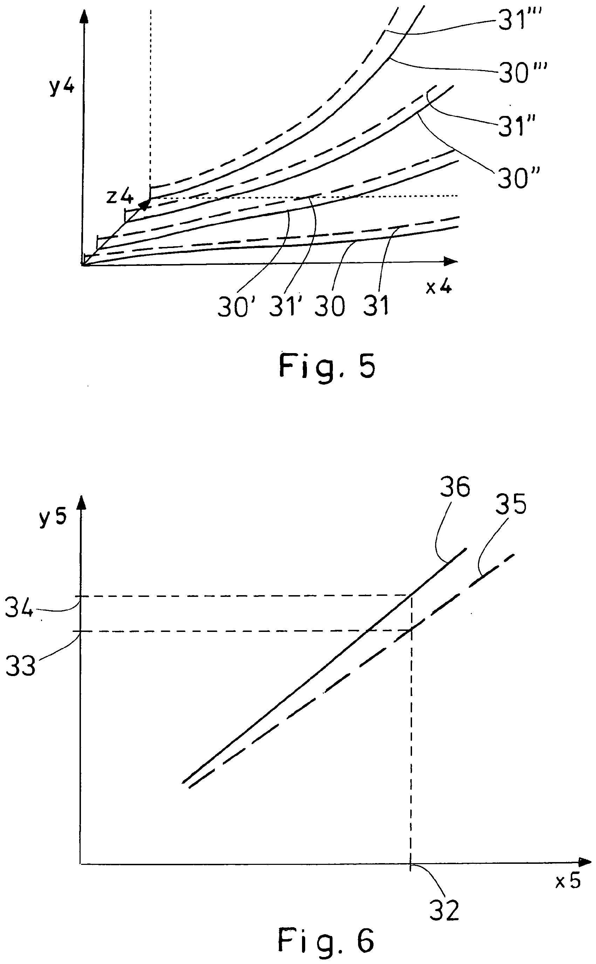

In Fig. 5 ist ein schematisches dreidimensionales Diagramm mit X4 dem Blattwinkel, Y4 dem Ertragspotential und Z4 der Drehzahl dargestellt. Es ist auch eine Schar von Kurven in diesem dreidimensionalen schematischen Diagramm vorgesehen, nämlich die Schar 30, 30', 30", 30'" für Kennlinien für auf 60% reduzierten Sollenergieertrag und 31, 31', 31" und 31"' für auf 80% reduzierten Sollenergieertrag. Mittels dieser Schar von Kennlinien kann unmittelbar auf das Ertragspotential Y4 geschlossen werden. Beispielsweise können bei auf 60% reduzierten Sollenergieertrag der Blattwinkel und die Drehzahl der Windenergieanlage gemessen werden und hieraus unmittelbar das Ertragspotential Y4 bestimmt werden. Es sind hierzu vorzugsweise noch mehr Kurven bzw. Kennlinien in der Windenergieanlage bzw. zugeordnet zur Windenergieanlage abgespeichert. Sollten ein Blattwinkel und/oder eine Drehzahl gemessen werden, die nicht unmittelbar auf einer abgespeicherten Kennlinie liegen, kann auch hierzu eine Interpolation zwischen den abgespeicherten Kennlinien vorgenommen werden.

Fig. 6 zeigt schematisch ein Diagramm, das beispielsweise zur Korrektur von Gondelanemometerwindmessungen bei verschiedenen Leistungsreduktionsgraden bzw. reduzierten Sollenergieerträgen Verwendung finden kann. Aufgetragen ist die Istwindgeschwindigkeit Y5 über der gemessenen Windgeschwindigkeit am Gondelanemometer X5. Bei einem Messwert 32 der Windgeschwindigkeit am Gondelanemometer kann über die Kennlinie von beispielsweise 50% Nennleistung 35 zu einer Istwindgeschwindigkeit 33 geschlossen werden. Entsprechend wäre bei einer reduzierten Leistung, die bei 80% der Nennleistung liegt bzw. einem reduzierten Sollenergieertrag, der bei 80% des Nennenergieertrages liegt, was durch die Kennlinie 36 dargestellt ist, auf eine Istwindgeschwindigkeit von 34 bei einem Messwert von 32 geschlossen werden. Aus dieser Istwindgeschwindigkeit kann dann wieder über die Leistungskennlinie der Windenergieanlage im leistungsoptimierten Normalbetrieb auf das Ertragspotential geschlossen werden.

Um somit den gesamten Rotor als Anemometer zu nutzen, sind Kennlinien der Windenergieanlage zugeordnet bzw. gespeichert, die einen Zusammenhang zwischen dem Ertragspotential bzw. der Istwindgeschwindigkeit mit einer Funktion bzw. einer Kennlinie oder Kennlinienschar abbildet, die in Abhängigkeit des Blattwinkels und der Drehzahl und eventuell besonderer Reglereinstellungen sind. Anstelle der Blattwinkel, der Drehzahl und des Ertragspotentials bzw. der Leistung und auch der Windgeschwindigkeit können auch andere Parameter gemessen werden, die beispielsweise vorstehend schon angegeben sind und ansonsten unmittelbar bzw. mittelbar mit der Abgabeleistung, dem Blattwinkel und der Drehzahl korrespondieren.

Ist beispielsweise von dem Netzbetreiber vorgegeben, dass nur 80% der Nennleistung über einen gewissen Zeitraum von einem Windenergieanlagenpark zu liefern sind bzw. von einer Windenergieanlage zu liefern sind, kann die Windenergieanlage bei niedrigen Windgeschwindigkeiten, also im Teillastbetrieb, zunächst im leistungsoptimierten Normalbetrieb, nämlich auf der Kennlinie im Teillastbetrieb betrieben werden. Erst bei Erreichen von 80% der Nennleistung bzw. einer Istwindgeschwindigkeit, die zu einem Ertrag von mehr als 80% der Nennleistung führen würde, müssen Leistungsreduktions- bzw. Energieertragsreduktionsmaßnahmen ergriffen werden. Es wird dann für eine vorgegebene Leistungsreduktion bzw. für einen vorgegebenen reduzierten Sollenergieertrag anhand von Kennlinienfeldern, die an einer Prototypenwindenergieanlage oder der vorliegenden Windenergieanlage vermessen wurden und in einem der Windenergieanlage zugeordneten Datenspeicher abgelegt wurden, ein Ertragspotential bestimmt. Es wird dabei in einem zugeordneten Kennlinienfeld abhängig von den Betriebsparametern der Windenergieanlage die Abgabeleistung, der Blattwinkel, die Drehzahl, das Ertragspotential und/oder die Windgeschwindigkeit durch mehrdimensionales Interpolieren ermittelt. Hierzu werden bevorzugt ausreichend viele Kennlinien eingemessen, damit die Interpolation eine entsprechend hohe Genauigkeit aufweist. Die gemessenen Kennlinien werden vorzugsweise in einem Datenspeicher gespeichert.

Anstatt der genannten Betriebsparameter können natürlich auch andere Parameter gemessen werden, die mit den Parametern Leistung, Blattwinkel, Drehzahl in physikalisch eindeutigen Zusammenhängen stehen, beispielsweise die Fliehkraft anstelle der Drehzahl, der elektrische Strom oder das mechanische Drehmoment anstelle der Leistung, der aerodynamische Anstellwinkel oder das Druckverhältnis an der Blattoberfläche anstelle des Blattwinkels. Bei der Nutzung der Rotordaten zum Bestimmen des Ertragspotentials werden beispielsweise die Effekte wie Luftdichteveränderung, Windgradient über die Rotorfläche, Schräganströmung schon berücksichtigt, so dass dieses besonders bevorzugt ist.

Bei allen erfindungsgemäßen und bevorzugten Ausführungsformen kann die Reduzierung des Sollenergieertrags bzw. die Leistungsreduzierung durch eine Begrenzung relativ zur aktuellen Abgabeleistung bzw. zum Abgabeenergieertrag erfolgen. Bevorzugt erfolgt die Leistungsreduzierung bzw. die Reduzierung des Sollenergieertrags jedoch durch Begrenzung der Nennleistung auf einen vorgegebenen Wert. Zudem kann alternativ eine Leistungsreduktion bzw. eine Reduktion des Sollenergieertrages auch durch ein Blattwinkel-Offset oder ein Drehzahl-Offset definiert werden, beispielsweise dadurch, dass der Blattwinkel um beispielsweise 3° gegenüber dem leistungsoptimierten Blattwinkel in Richtung Fahnenstellung verfahren wird oder die Drehzahl um eine Umdrehung/min. des Rotors oder 10% unterhalb der leistungsoptimalen Drehzahl eingestellt wird. Die Begrifflichkeit "vorgebbarer reduzierter Sollenergieertrag" umfasst auch diese Möglichkeiten der Reduktion. Es wird somit vorzugsweise eine Mehrzahl von Korrekturfunktionen bzw. Korrekturkennlinien bzw. Kennlinien in Abhängigkeit von einem Maß einer Leistungsreduktion bzw. Sollenergieertragsreduktion vermessen, und zwar insbesondere in Abhängigkeit vom prozentualen Grad der Leistungsreduktion, vom prozentualen Grad der Sollenergieertragsreduktion, vom Blattwinkel-Offset und/oder vom Drehzahl-Offset bei wenigstens einer Windenergieanlage.

Hierzu werden die Kennlinien wenigstens einmal vor Beginn der Bestimmung eines Ertragsausfalls eingemessen bzw. bestimmt. Die Kennlinien können allerdings auch regelmäßig, beispielsweise jährlich, wiederholt werden, um Veränderungen im Ertragspotential der Windenergieanlage, z.B. einer Wirkungsgradverschlechterung durch Alterung, zu berücksichtigen. Hierzu ist allerdings wieder ein kalibriertes Windgeschwindigkeits- bzw. Energierertragssignal notwendig, beispielsweise mittels eines Messmastes oder einer kalibrierten benachbarten Referenzanlage. Ein kalibriertes Windgeschwindigkeitssignal stammt vorzugsweise aus einem Messmast eines Lidar- bzw. Sodar-Messsystems oder -Messsystemen mit kalibrierter Windsensorik, kann allerdings auch durch ein kalibriertes Energieertrags- oder Windgeschwindigkeitssignal einer benachbarten Windenergieanlage bereitgestellt werden, die frei angeströmt wird.

Vorzugsweise werden die Ertragsausfälle der Windenergieanlagen eines Windparks miteinander verglichen und eine Nachvermessung einer Windenergieanlage durchgeführt, wenn deren Ertragsausfälle bzw. deren Ertragsausfall im Verhältnis zu den Ertragsausfällen der benachbarten Windenergieanlagen ohne erkennbare Ursache über ein vorgegebenes Maß hinaus verändert ist.

Um kurzzeitige Schwankungen der Windgeschwindigkeit und der Windrichtung auszumitteln, wird bevorzugt mit gleitenden Mittelwerten, beispielsweise mit Mittelungszeiten zwischen 1 Minute und 15 Minuten, bevorzugt bei 10 Minuten gearbeitet.

### Bezugszeichenliste

- X1: Windgeschwindigkeit
- Y1: Generatordrehzahl
- X2: Blattwinkel
- Y2: Windgeschwindigkeit
- X3: Zeit [s]
- Y3: Rotordrehzahl
- X4: Blattwinkel
- Y4: Ertragspotential
- X5: Windgeschwindigkeit am Gondelanemometer
- Y5: Istwindgeschwindigkeit
- Z4: Drehzahl
- 10: Nenndrehzahl
- 11: verbotener Drehzahlbereich
- 12: verbotener Drehzahlbereich
- 13: Leerlaufdrehzahl bei α = 20°
- 14: Leerlaufdrehzahl bei α = 30°
- 15: Leerlaufdrehzahl bei α = 40°
- 16: Leerlaufdrehzahl bei α = 50°
- 17: Leerlaufdrehzahl bei α = 60°
- 18: Leerlaufdrehzahl bei α = 70°
- 19: Leerlaufdrehzahl bei α = 80°
- 20-20^{IV}: Messwert
- 21: Ausgleichsgerade
- 22: Kennlinie bei 60% Nennleistung
- 23: Kennlinie bei 80% Nennleistung
- 24: Kennlinie bei 100% Nennleistung
- 25: Kurve
- 30, 30', 30", 30'": Kurve für auf 60% reduzierten Sollenergieertrag
- 31, 31', 31 ", 31'": Kurve für auf 80% reduzierten Sollenergieertrag
- 32: Messwert
- 33: transformierter Messwert
- 34: transformierter Messwert
- 35: Kennlinie bei 50% Nennleistung
- 36: Kennlinie bei 80% Nennleistung

## Patentansprüche

1. Verfahren zum Betrieb einer Windenergieanlage mit wenigstens einem Rotorblatt, dessen Blattwinkel einstellbar ist, die mit einem vorgebbaren reduzierten Sollenergieertrag betrieben wird, wobei zum Bestimmen eines Ertragsausfalls ein Ertragspotential (Y4) bestimmt wird, wobei zum Bestimmen des Ertragspotentials (Y4) wenigstens ein vorgebbarer Betriebsparameter (X1, Y1, X2, Y2, Y3, X4 Y4, Z4, X5, Y5) der Windenergieanlage gemessen wird und auf wenigstens eine gespeicherte Kennlinie (21, 22, 23, 24, 30-30"', 31-31"', 35, 36) für den reduzierten Sollenergieertrag angewendet wird, wobei außerdem der Istenergieertrag bestimmt wird und der Ertragsausfall aus der Differenz des Ertragspotentials (Y4) und des Istenergieertrags gebildet wird, wobei als vorgebbarer Betriebsparameter (X1, Y1, X2, Y2, Y3, X4, Y4, Z4, X5, Y5) ein leistungsabhängiger Parameter, ein rotationsabhängiger Parameter, ein blattwinkelabhängiger Parameter und/oder ein windgeschwindigkeitsabhängiger Parameter vorgesehen ist oder sind, wobei mittels einer Kennlinie (30-30"', 31-31"') für den vorgegebenen reduzierten Sollenergieertrag und einem gemessenen rotationsabhängigen Parameter (Y1, Z4) und einem gemessenen blattwinkelabhängigen Parameter (X2, X4) das Ertragspotential (Y4) bestimmt wird.

2. Verfahren nach Anspruch 1, **dadurch gekennzeichnet, dass** als windgeschwindigkeitsabhängiger Parameter eine mittels eines Gondelanemometers der Windenergieanlage gemessene Windgeschwindigkeit (X5) vorgesehen ist, die mit einer für den vorgegebenen reduzierten Sollenergieertrag gespeicherten Kennlinie (21, 22-24, 35, 36) in eine Istwindgeschwindigkeit (X2, Y5) und/oder ein Ertragspotential (Y4) transformiert wird.

3. Verfahren nach Anspruch 1 oder 2, **dadurch gekennzeichnet, dass** die wenigstens eine gespeicherte Kennlinie (22-24, 30-30"', 31-31"', 35, 36) an der Windenergieanlage oder einer dieser Windenergieanlage entsprechenden Windenergieanlage mittels wenigstens einer Referenzmessung und einem kalibrierten Energieertrags- und/oder kalibrierten Windgeschwindigkeitssignal bestimmt ist oder wird.

4. Verfahren nach einem der Ansprüche 1 bis 3, **dadurch gekennzeichnet, dass** eine Schar von Kennlinien (22-24, 30-30"', 31-31"', 35, 36) für verschiedene vorgegebene reduzierte Sollenergieerträge vorgesehen ist.

5. Verfahren nach Anspruch 4, **dadurch gekennzeichnet, dass** bei einem nicht vermessenen vorgegebenen reduzierten Sollenergieertrag zwischen den Kennlinien (22-24, 30-30"', 31-31"', 35, 36) interpoliert wird.

6. Verfahren nach einem der Ansprüche 1 bis 5, **dadurch gekennzeichnet, dass** als leistungsabhängiger Parameter eine Leistung oder ein Drehmoment, als rotationsabhängiger Parameter eine Drehzahl oder eine Fliehkraft und/oder als blattwinkelabhängiger Parameter ein Blattwinkel oder ein Druckunterschied an einem Rotorblatt vorgesehen ist.

7. Verfahren zum Betrieb eines Windenergieanlagenparks mit mehreren Windenergieanlagen, wobei wenigstens eine Windenergieanlage nach einem Verfahren nach einem der Ansprüche 1 bis 6 betrieben wird.

8. Verfahren nach Anspruch 7, **dadurch gekennzeichnet, dass** die wenigstens eine Windenergieanlage leistungslos betrieben wird und die weiteren Windenergieanlagen in einem leistungsoptimierten Normalbetrieb betrieben werden.

9. Verfahren nach Anspruch 8, **dadurch gekennzeichnet, dass** die leistungslos betriebene Windenergieanlage auf einen vorgegebenen Blattwinkel (X2, X4) des wenigstens einen Rotorblatts eingestellt wird und über eine Kennlinie (13-14) das Ertragspotential (Y4) aus der Drehzahl (Y1, Y3) der Windenergieanlage ermittelt wird.

10. Verfahren nach Anspruch 9, **dadurch gekennzeichnet, dass** die leistungslos betriebene Windenergieanlage auf eine vorgegebene Drehzahl (Y1, Y3) eingestellt wird und das Ertragspotential (Y4) über eine Kennlinie anhand des Blattwinkels (X2, X4) der Rotorblätter der Windenergieanlage bestimmt wird.

## Claims

1. A method for operating a wind turbine having at least one rotor blade with a blade angle that is adjustable and is operated with a settable reduced targeted energy yield, wherein to determine a yield loss, a yield potential (Y4) is determined, wherein to determine the yield potential (Y4), at least one settable operating parameter (X1, Y1, X2, Y2, Y3, X4 Y4, Z4, X5, Y5) of the wind turbine is measured and applied to at least one saved characteristic (21, 22, 23, 24, 30-30"', 31-31"', 35, 36) for the reduced target energy yield, wherein the actual energy yield is also determined, and the yield loss is formed from the difference between the yield potential (Y4) and actual energy yield, wherein a performance-dependent parameter, a rotation-dependent parameter, a blade angle-dependent parameter, and/or a wind speed-dependent parameter is or are provided as the settable operating parameter (X1, Y1, X2, Y2, Y3, X4, Y4, Z4, X5, Y5), wherein the yield potential (Y4) is determined by means of a characteristic (30-30"', 31-31"') for the set reduced target energy yield and a measured rotation-dependent parameter (Y1, Z4) and a measured blade angle-dependent parameter (X2, X4).

2. The method according to claim 1, **characterized in that** a wind speed (X5) measured with a nacelle anemometer of the wind turbine is provided as the wind-speed-dependent parameter and is transformed with a characteristic (21, 22-24, 35, 36) saved for the set reduced target energy yield into an actual wind speed (X2, Y5), and/or a yield potential (Y4).

3. The method according to claim 1 or 2, **characterized in that** the at one least saved characteristic (22-24, 30-30"', 31-31"', 35, 36) of the wind turbine, or a wind turbine corresponding to this wind turbine, is or will be determined with at least one reference measurement and a calibrated energy yield and/or calibrated wind speed signal.

4. The method according to one of claims 1 to 3, **characterized in that** a set of characteristics (22-24, 30-30"', 31-31"', 35, 36) for various set reduced target energy yields is provided.

5. The method according to claim 4, **characterized in that** the characteristics (22-24, 30-30"', 31-31"', 35, 36) are interpolated in the event of an unmeasured set reduced target energy yield.

6. The method according to one of claims 1 to 5, **characterized in that** a performance or a torque is provided as the performance-dependent parameter, a rotational speed or a centrifugal force is provided as the rotation-dependent parameter, and/or a blade angle or a pressure differential at a rotor blade is provided as the blade angle-dependent parameter.

7. A method for operating a wind farm with a plurality of wind turbines, wherein at least one turbine is operated according to a method according to one of claims 1 to 6.

8. The method according to claim 7, **characterized in that** the at least one wind turbine is operated without power, and the other wind turbines are operated in a performance-optimized normal mode.

9. The method according to claim 8, **characterized in that** the wind turbine operated without power is adjusted to a set blade angle (X2, X4) of the at least one rotor blade, and the yield potential (Y4) is determined from the rotational speed (Y1, Y3) of the wind turbine by a characteristic (13-14).

10. The method according to claim 9, **characterized in that** the wind turbine operated without power is adjusted to a set rotational speed (Y1, Y3), and the yield potential (Y4) is determined by a characteristic with reference to the blade angle (X2, X4) of the rotor blades of the wind turbine.

## Revendications

1. Procédé pour faire fonctionner une éolienne ayant au moins une pale de rotor dont l'angle de pale est réglable, laquelle éolienne fonctionne avec un rendement énergétique de consigne réduit pouvant être prédéfini, lequel procédé comporte les étapes consistant à déterminer un rendement potentiel (Y4) afin de déterminer une perte de rendement, mesurer au moins un paramètre de fonctionnement (X1, Y1, X2, Y2, Y3, X4, Y4, Z4, X5, Y5) de l'éolienne pouvant être prédéfini afin de déterminer le rendement potentiel (Y4) et l'appliquer à au moins une courbe caractéristique (21, 22, 23, 24, 30-30"', 31-31"', 35, 36) enregistrée pour le rendement énergétique de consigne réduit, déterminer également le rendement énergétique réel et établir la perte de rendement à partir de la différence entre le rendement potentiel (Y4) et le rendement énergétique réel, définir un paramètre dépendant de la puissance, un paramètre dépendant de la rotation, un paramètre dépendant de l'angle de pale et/ou un paramètre dépendant de la vitesse du vent en tant que paramètre de fonctionnement (X1, Y1, X2, Y2, Y3, X4, Y4, Z4, X5, Y5) pouvant être prédéfini, déterminer le rendement potentiel (Y4) au moyen d'une courbe caractéristique (30-30"', 31-31"') pour le rendement énergétique de consigne réduit prédéfini et d'un paramètre mesuré dépendant de la rotation (Y1, Z4) et d'un paramètre mesuré dépendant de l'angle de pale (X2, X4).

2. Procédé selon la revendication 1, **caractérisé en ce qu'**une vitesse de vent (X5) mesurée au moyen d'un anémomètre de nacelle de l'éolienne est destinée à servir de paramètre dépendant de la vitesse du vent qui est transformé avec une courbe caractéristique (21, 22-24, 35, 36) enregistrée pour le rendement énergétique de consigne réduit prédéfini en une vitesse de vent réelle (X2, Y5) et/ou un rendement potentiel (Y4).

3. Procédé selon la revendication 1 ou la revendication 2, **caractérisé en ce que** ladite au moins une courbe caractéristique (22-24, 30-30"', 31-31"', 35, 36) est déterminée ou apte à être déterminée sur l'éolienne ou sur une éolienne correspondant à cette éolienne au moyen d'au moins une mesure de référence et d'un signal de rendement énergétique calibré et/ou d'un signal de vitesse de vent calibré.

4. Procédé selon l'une des revendications 1 à 3, **caractérisé en ce qu'**une famille de courbes caractéristiques (22-24, 30-30"', 31-31"', 35, 36) est prévue pour différents rendements énergétiques de consigne réduits prédéfinis.

5. Procédé selon la revendication 4, **caractérisé en ce que** lorsqu'un rendement énergétique de consigne réduit prédéfini n'est pas mesuré, une interpolation est réalisée entre les courbes caractéristiques (22-24, 30-30"', 31-31"', 35, 36).

6. Procédé selon l'une des revendications 1 à 5, **caractérisé en ce qu'**une puissance ou un couple est destiné à servir de paramètre dépendant de la puissance, une vitesse de rotation ou une force centrifuge est destinée à servir de paramètre dépendant de la rotation et/ou un angle de pale ou une différence de pression sur une pale de rotor est destiné à servir de paramètre dépendant de l'angle de pale.

7. Procédé pour faire fonctionner un parc éolien comportant plusieurs éoliennes, dans lequel au moins une éolienne fonctionne selon un procédé de l'une des revendications 1 à 6.

8. Procédé selon la revendication 7, **caractérisé en ce que** ladite au moins une éolienne fonctionne sans puissance et les autres éoliennes fonctionnent dans un mode de fonctionnement normal à puissance optimisée.

9. Procédé selon la revendication 8, **caractérisé en ce que** l'éolienne fonctionnant sans puissance est réglée à un angle de pale prédéfini (X2, X4) de ladite au moins une pale de rotor et le rendement potentiel (Y4) est déterminé à partir de la vitesse de rotation (Y1, Y3) de l'éolienne en utilisant une courbe caractéristique (13-14).

10. Procédé selon la revendication 9, **caractérisé en ce que** l'éolienne fonctionnant sans puissance est réglée à une vitesse de rotation prédéfinie (Y1, Y3) et le rendement potentiel (Y4) est déterminé au moyen de l'angle de pale (X2, X4) des pales de rotor de l'éolienne, en utilisant une courbe caractéristique.
